# EUROPEAN PATENT APPLICATION

(11) **EP 2 533 228 A2**
(43) Date of publication of application: **12.12.2012**
(21) Application number: 12162719.4
(22) Date of filing: 30.03.2012
(51) Int. Cl.: G09B 21/02

(54) **Apparatus and method for inputting braille in device having touch screen**

(30) Priority: 10.06.2011 KR 20110056099
(71) Applicant: Samsung Electronics Co., Ltd., Suwon-si, Gyeonggi-do, 443-742 (KR)
(72) Inventor: Jwa, Chang-Hyup, Jetu-do (KR)
(74) Representative: Jenkins, Richard Gavin

(57) **Abstract**

A method and an apparatus for inputting Braille in a device having a touch screen are provided. In the method, flicking motion that occurs on the touch screen is detected. At least one of predetermined flicking patterns included in the flicking motion is determined. Braille input is configured by filling a dot of a position corresponding to at least one flicking pattern determined inside the Braille input.

## Description

### BACKGROUND OF THE INVENTION

### 1. Field of the Invention

The present invention relates generally to a device having a touch screen, and more particularly, to an apparatus and a method for easily inputting Braille in a device having a touch screen.

### 2. Description of the Related Art

A mobile terminal, due to its convenience and necessity, has become a necessity of modern people. Therefore, service providers and mobile terminal manufacturers provide many additional functions, increasing utility of the mobile terminal.

Generally, a mobile terminal visually displays information to a user via a screen, and an interface for receiving user input is implemented so that it is visually recognized. Therefore, a visually handicapped person is not able to input characters to a mobile terminal and an alternative way to input characters for a visually handicapped person using a mobile terminal is needed.

### SUMMARY OF THE INVENTION

Accordingly, the present invention is designed to solve at least the above-described problems and/or disadvantages and to provide at least the advantages below. Accordingly, an aspect of the present invention is to provide an apparatus and a method for easily inputting a character in a device having a touch screen.

Another aspect of the present invention is to provide an apparatus and a method for inputting a character in a device having a touch screen when the sense of sight cannot be used.

Still another aspect of the present invention is to provide an apparatus and a method for inputting Braille in a device having a touch screen.

Yet another aspect of the present invention is to provide an apparatus and a method for inputting Braille using successive flicking motion in a device having a touch screen.

In accordance with an aspect of the present invention, a method for inputting Braille in a device having a touch screen is provided. The method includes detecting flicking motion that occurs on the touch screen, determining at least one of predetermined flicking patterns based on the flicking motion, and configuring Braille input by filling a dot of a position corresponding to at least one flicking pattern determined inside the Braille input.

In accordance with another aspect of the present invention, an apparatus having a touch screen that provides a Braille input function is provided. The apparatus includes the touch screen for detecting flicking motion that occurs on the touch screen, and a controller for determining at least one of predetermined flicking patterns based on the flicking motion, and configuring Braille input by filling a dot of a position corresponding to at least one flicking pattern determined inside the Braille input.

### BRIEF DESCRIPTION OF THE DRAWINGS

The above and other aspects, features and advantages of the present invention will be more apparent from the following description taken in conjunction with the accompanying drawings, in which:
FIG. 1 is a diagram illustrating an example of a Braille table;
FIG. 2 is a diagram illustrating an example of a correspondence relation between a flicking pattern and a dot in a device having a touch screen according to an embodiment of the present invention;
FIG. 3 is a diagram illustrating an example of flicking for inputting a character in a device having a touch screen according to an embodiment of the present invention;
FIG. 4 is a diagram illustrating an example of a correspondence relation between a flicking pattern and a dot in a device having a touch screen according to an embodiment of the present invention;
FIG. 5 is a diagram illustrating an example of flicking for inputting a character in a device having a touch screen according to an embodiment of the present invention;
FIG. 6 is a flowchart illustrating a procedure for operating a device having a touch screen according to an embodiment of the present invention; and
FIG. 7 is a block diagram illustrating a device having a touch screen according to an embodiment of the present invention.

Throughout the drawings, like reference numerals will refer to like parts, components and structures.

### DETAILED DESCRIPTION OF EMBODIMENTS OF THE PRESENT INVENTION

Various embodiments of the present invention will be described in detail herein below with reference to the accompanying drawings. In the following description, well-known functions or constructions are not described in detail to avoid obscuring the invention with unnecessary detail.

Embodiments of the present invention provide technology for easily inputting a character in a circumstance where the sense of sight cannot be used in a device having a touch screen. A character input technology according to an embodiment of the present invention is applicable to all of devices having a touch screen such as a mobile terminal including a cellular phone, a Personal Communication System (PCS), a Personal Digital Assistant (PDA), an International Mobile Telecommunication-2000 (IMT-2000) terminal, etc., a laptop computer, a smart phone, a tablet Personal Computer (PC), etc.

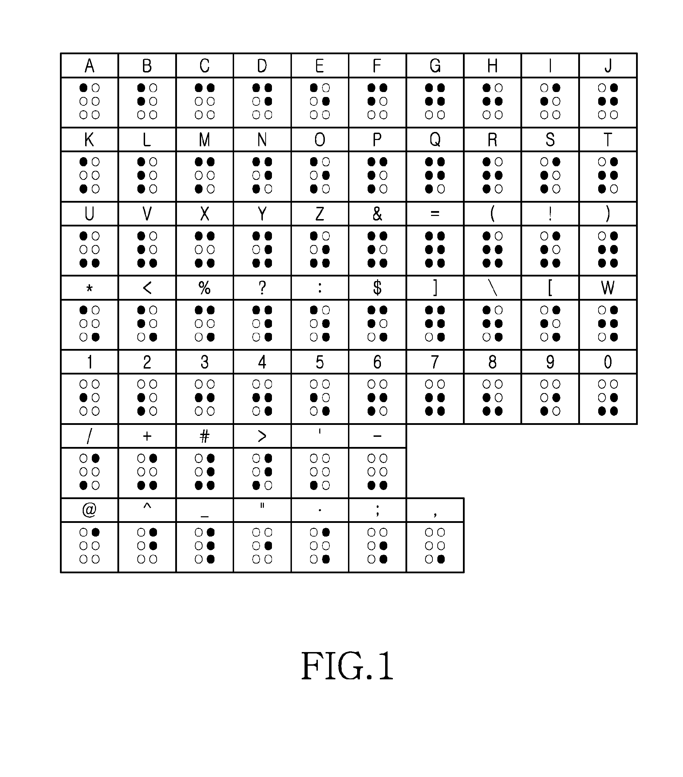

An embodiment of the present invention provides a character input alternative using Braille. Braille is a special character code designed to allow a visually handicapped person to feel the character with his fingers to read the character. Braille represents characters and codes using six dots including horizontal 2 dots and vertical 3 dots. FIG. 1 illustrates an example of a Braille character table. Referring to FIG. 1, alphabet characters, numbers, and special characters are represented according to the number of filled dots and positions of filled dots among the six positions.

As described above, since the Braille character set is configured by a combination of filled and vacant dots, inputting a Braille character may be performed by a process of filling at least one dot at a selected position of the six positions. Therefore, an embodiment of the present invention defines a plurality of flicking patterns, and allows each flicking pattern to correspond to the position of each dot. In addition, an embodiment of the present invention uses the flicking patterns as commands for filling each dot. Herein, the flicking refers to a finger tap-in, moving, and tap-out on a touch screen. The number of flicking patterns and correspondence relations defined may change depending on specific embodiments. However, it is preferable that a plurality of flicking patterns are defined such that the probability of an erroneous determination between them is minimal, for example by minimizing the similarity between the flicking pattern sand the number of the flicking patterns.

According to an embodiment of the present invention, six flicking patterns are defined and the six flicking patterns correspond to six positions, respectively. Braille character inputting according to an embodiment of the present invention is described below in more detail.

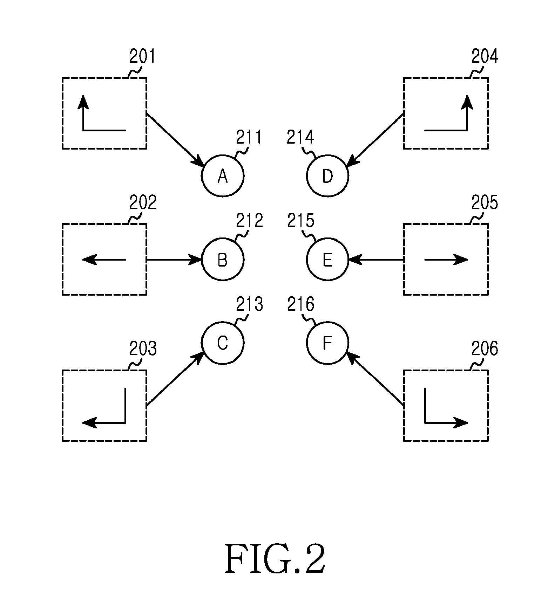

According to an embodiment of the present invention, Braille character input is performed on a six-dot basis expressing one character. Therefore, six flicking patterns for identifying six dots are required. For example, flicking patterns and correspondence relations with dots may be defined as in FIG. 2.

FIG. 2 is a diagram illustrating an example of a correspondence relation between a flicking pattern and a dot in a device having a touch screen according to an embodiment of the present invention. Referring to FIG. 2, a first pattern 201 is defined as flicking to the left and then to the top, a second pattern 202 is defined as flicking to the left, a third pattern 203 is defined as flicking to the bottom and then to the left, a fourth pattern 204 is defined as flicking to the right and then to the top, a fifth pattern 205 is defined as flicking to the right, and a sixth pattern 206 is defined as flicking to the bottom and then to the right. In addition, a dot A 211 positioned at the upper left corresponds to the first pattern 201, a dot B 212 positioned at the middle left corresponds to the second pattern 202, a dot C 213 positioned at the bottom left corresponds to the third pattern 203, a dot D 214 positioned at the upper right corresponds to the fourth pattern 204, a dot E 215 positioned at the middle right corresponds to the fifth pattern 205, and a dot F 216 positioned at the bottom right corresponds to the sixth pattern 206. Therefore, when inputting one character, a user fills at least one of the six dots by inputting at least one of the first pattern 201, the second pattern 202, the third pattern 203, the fourth pattern 204, the fifth pattern 205, and the sixth pattern 206.

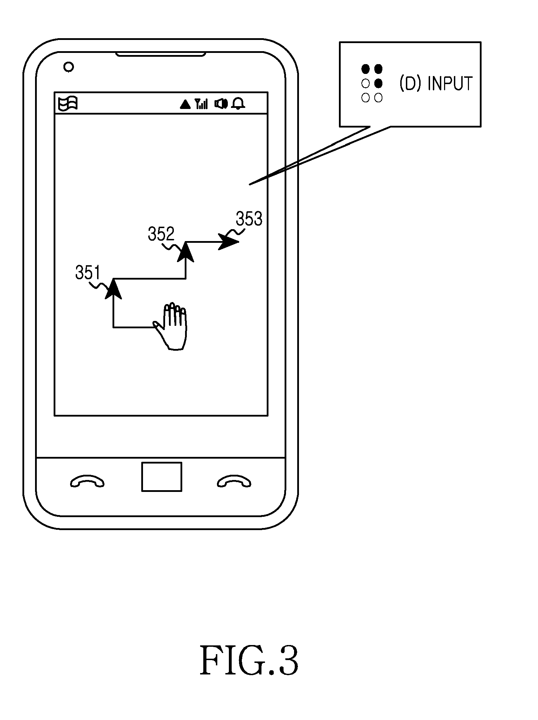

Each Braille character is determined via flicking from a point where tap-in occurs to a point where tap-out occurs. Therefore, all of six dots are vacant at a point where flicking starts. After tap-in, a user moves a touch coordinate while maintaining a touch to fill a dot of a desired position and then tap-out. While the touch coordinate moves, at least one dot is filled and Braille input is completed depending on an analysis result of the flicking. For example, a Braille character expressing 'D', where dots of the upper left, upper right, and middle right are filled is described with reference to FIG. 3. FIG. 3 illustrates an example of flicking for inputting a character in a device having a touch screen according to an embodiment of the present invention. Referring to FIG. 3, from tap-in to tap-out, three flicking patterns 351, 352, and 353 have been determined. A first determined pattern 351 is the first pattern 201 that designates a dot of the upper left, a second determined pattern 352 is the fourth pattern 204 that designates a dot of the upper right, and a third determined pattern 353 is the fifth pattern 205 that designates a dot of the middle right. Analysis of a pattern may be performed while flicking is performed, or after flicking ends, that is, tap-out.

Braille input expressing a different character other than 'D' may be input via a combination of flicking patterns as illustrated in FIG. 3. Combinations of flicking patterns corresponding to Braille characters illustrated in FIG. 1 according to the corresponding relation illustrated in FIG. 2 are shown in Table 1.

**Table 1**

| Character | Position of filled dots | Combination of flicking patterns |
|---|---|---|
| A | A | ← ↑ |
| B | A B | ← ↑, ← |
| C | D | ← ↑, → ↑ |
| D | A D E | ← ↑, → ↑, → |
| E | A E | ← ↑, → |
| F | A B D | ← ↑, ←, → ↑ |
| G | A B D E | ← ↑, ←, → ↑, → |
| H | A B E | ← ↑, ←, → |
| I | B D | ←, → ↑ |
| J | B D E | ←, → ↑, → |
| K | A C | ← ↑, ↓ ← |
| L | A B C | ← ↑, ←, ↓ ← |
| M | A C D | ← ↑, ↓ ←, → ↑ |
| N | A C D E | ← ↑, ↓ ←, → ↑, → |
| O | A C E | ← ↑, ↓ ←, → |
| P | A B C D | ← ↑, ←, ↓ ←, → ↑ |
| Q | A B C D E | ← ↑, ←, ↓ ←, → ↑, → |
| R | A B C E | ← ↑, ←, ↓ ←, → |
| S | C D | ←, ↓ ←, → ↑ |
| T | B C D E | ←, ↓ ←, → ↑, → |
| U | A C F | ← ↑, ↓ ←, ↓ → |
| V | A B C F | ← ↑, ←, ↓ ←, ↓ ← |
| w | B D E F | ←, → ↑, →, ↓ ← |
| X | A C D F | ← ↑, ↓ ←, → ↑, ↓ ← |
| Y | A C D E F | ← ↑, ↓ ←, ← ↑, →, ↓ ← |
| z | A C E F | ← ↑, ↓ ←, ←, ↓ ← |
| 1 | B | ← |
| 2 | B C | ←, ↓ ← |
| 3 | B E | ←, → |
| 4 | B E F | ←, →, ↓ ← |
| 5 | B F | ←, ↓ ← |
| 6 | B C E | ←, ↓ ←, → |
| 7 | B C D F | ←, ↓ ←, → ↑, ↓ ← |
| 8 | B C F | ←, ↓ ←, ↓ ← |
| 9 | C E | ↓ ←, →, |
| 0 | C E F | ↓ ←, →, ↓ ← |

According to an embodiment of the present invention, four flicking patterns are defined, three flicking patterns correspond to three positions configuring one row, and one flicking pattern may be used as a column move command. Braille character input according to an embodiment of the present invention is described below in more detail.

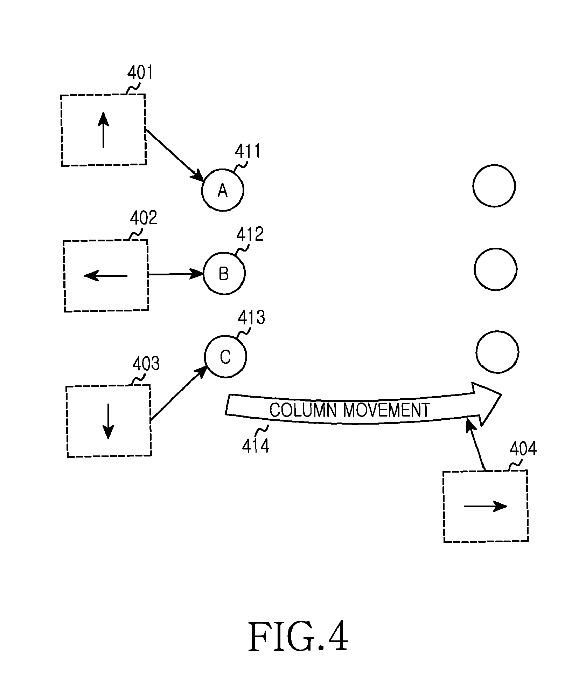

According to an embodiment of the present invention, Braille character input is performed on a column basis, not a six-dot basis expressing one character. Since each column includes three dots, three flicking patterns for identifying three dots are required. In addition, one flicking pattern for expressing that inputting for one column ends is required. For example, a correspondence relation between flicking patterns and dots may be defined as in FIG. 4.

FIG. 4 is a diagram illustrating an example of a correspondence relation between a flicking pattern and a dot in a device having a touch screen according to an embodiment of the present invention. Referring to FIG. 4, a first pattern 401 is defined as flicking to the top, a second pattern 402 is defined as flicking to the left, a third pattern 403 is defined as flicking to the bottom, and a fourth pattern 404 is defined as flicking to the right. In addition, a dot A 411 positioned at the upper end corresponds to the first pattern 401, a dot B 412 positioned at the middle end corresponds to the second pattern 402, a dot C 413 positioned at the lower end corresponds to the third pattern 403, and a column change 414 corresponds to the fourth pattern 404. Therefore, when inputting one character, a user fills at least one dot positioned at the left column by inputting at least one of the first pattern 401, the second pattern 402, and the third pattern 403, moves to the right column by inputting the fourth pattern 404, and fills at least one dot positioned at the right column by inputting at least one of the first pattern 401, the second pattern 402, and the third pattern 403.

Unlike the embodiment described above, this embodiment may complete a single Braille character without a tap-out. Because the fourth pattern 404 designating a column change is defined, completion of one Braille input may be determined via two times of column change. In addition, unlike in the previous embodiment, here, flicking patterns corresponding to three dots do not include the same direction. Therefore, in inputting one column, an input order of dots may be freely determined.

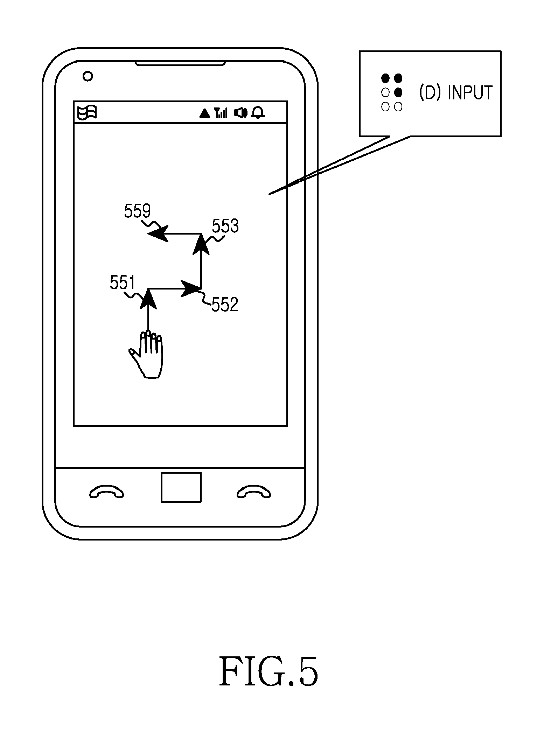

When starting the flicking motion, each of the six dots are vacant. After tap-in, a user moves a touch coordinate while maintaining a touch to fill a dot of a desired position in the left column, and then fills a dot of a desired position in the right column. While the touch point moves, at least one dot is filled depending on an analysis result of the flicking motion, and Braille is completed. For example, when inputting Braille expressing `D', that is, Braille where dots of the upper left, upper right, and middle right are filled is described with reference to FIG. 5. FIG. 5 illustrates an example of flicking for inputting a character in a device having a touch screen according to an embodiment of the present invention. Referring to FIG. 5, from tap-in to tap-out, four flicking patterns 551, 552, 553, and 554 have been determined. A first determined pattern 551 is the first pattern 401 that designates a dot of the upper end, a second determined pattern 552 is the fourth pattern 404 that designates a column change, a third determined pattern 553 is the first pattern 401 that designates a dot of the upper end, and a fourth determined pattern 554 is the second pattern 402 that designates a dot of the middle end. Analysis of a pattern may be performed while flicking is performed, or after flicking ends or column change is performed.

Braille input expressing a different character other than 'D' may be input via a combination of the flicking patterns as illustrated in FIG. 5. Combinations of flicking patterns corresponding to Braille illustrated in FIG. 1 according to the correspondence relation illustrated in FIG. 4 are shown in Table 2. In Table 2, patterns bound with brackets may change their order within the brackets.

**Table 2**

| Character | Position of filled dots | Combination of the flicking patterns |
|---|---|---|
| A | left-A | ↑ |
| B | left-A left-B | (↑ ←) |
| C | eft-A right-A | ↑ → ↑ |
| D | left-A right-A right-B | ↑ → (↑ ←) |
| E | left-A right-B | ↑ → ← |
| F | left-A left-B right-A | (↑ ← ) → ↑ |
| G | left-A left-B right-A right-B | (↑ ←) → (↑ ←) |
| H | left-A left-B right-B | (↑ ←) → ← |
| I | left-B right-A | ← → ↑ |
| J | left-B right-A right-B | ← → (↑ ←) |
| K | left-A left-C | (↑ ↓) |
| L | left-A left-B left-C | ↑ ← ↓ |
| M | left-A left-C right-A | (↑ ↓) → ↑ |
| N | left-A left-C right-A right-B | (↑ ↓) → (↑ ←) |
| O | left-A left-C right-B | (↑ ↓) → ← |
| P | left-A left-B left-C right-A | (↑ ← ↓) → ↑ |
| Q | left-A left-B left-C right-A right-B | (↑ ← ↓) → (↑ ←) |
| R | left-A left-B left-C right-B | (↑ ← ↓) → ← |
| S | left-B left-C right-A | (← ↓) → ↑ |
| T | left-B left-C right-A right-B | (← ↓) → (↑ ←) |
| U | left-A left-C right-C | (↑ ↓) → ↓ |
| V | left-A left-B left-C right-C | (↑ ← ↓) → ↓ |
| W | eft-B right-A right-B right-C | ← → (↑ ← ↓) |
| X | left-A left-C right-A right-C | (↑ ↓) → (↑ ↓) |
| Y | left-A left-C right-A right-B right-C | (↑ ↓) → (↑ ← ↓) |
| Z | eft-A left-C right-B right-C | (↑ ↓) → (← ↓) |
| 1 | left-B | ← |
| 2 | left-B left-C | (← ↓) |
| 3 | left-B right-B | ← → ← |
| 4 | left-B right-B right-C | ← → (← ↓) |
| 5 | left-B right-C | ← → ↓ |
| 6 | left-B left-C right-B | (← ↓) → ← |
| 7 | left-B left-C right-A right-C | (← ↓) → (↑ ↓) |
| 8 | left-B left-C right-C | (← ↓) → ↓ |
| 9 | left-C right-B | ↓ → ← |
| 0 | left-C right-B right-C | ↓ → (← ↓) |

According to an embodiment of the present invention, three flicking patterns are defined, two flicking patterns correspond to two positions configuring one row, and one flicking pattern may be used for a row move command. For example, in each row, the left dot may correspond to left flicking, the right dot may correspond to right flicking, and row change may correspond to lower flicking.

As described above, Braille may be input using flicking patterns defined in advance. Since an embodiment of the present invention considers a situation where the sense of sight cannot be used, it is also difficult to determine whether input is performed correctly. Therefore, an embodiment of the present invention proposes an alternative for providing feedback for the input.

Feedback may be performed using vibration or sound. When using the vibration, a feedback signal may be defined using the length of the vibration, the frequency of the vibration, etc. as a factor. When using sound, the direction of flicking may be informed using voice. Alternatively, when using sound, a feedback signal may be defined using the length of a beep tone, occurrence frequency of a beep tone, etc. as a factor.

When providing feedback on a character or Braille basis, since the number of cases is very large, feedback is complicated. Therefore, an embodiment of the present invention provides feedback on a flicking motion direction basis, or a filled dot basis.

A specific example for feedback of a flicking direction basis is described below.

According to an embodiment of the present invention, feedback may be performed for four cases of the right side, the left side, the upper side, and the lower side. In the embodiment illustrated in FIG. 2, since flicking to the right or to the left is included in all patterns, flicking to the right or to the left is fed back using one time of vibration for fast detection. At this point, the right side and the left side are discriminated using the length of vibration. Since the upper side or the lower side is included in some of patterns, flicking to the upper side or the lower side is fed back using two times of vibration. At this point, the upper side and the lower side are discriminated using the length of vibration. Here, the vibration may be replaced by a beep tone.

According to an embodiment of the present invention, feedback is performed for two cases of the horizontal direction and the vertical direction. Since a probability of erroneous determination between opposite directions, that is, between the right side and the left side, or between the upper side and the lower side is relatively low, the opposite directions are fed back using the same method. For example, the right side and the left side may be fed back using short vibration, and the upper side and the lower side may be fed back using long vibration. For another example, the right side and the left side may be fed back using two times of vibration, and the upper side and the lower side may be fed back using one time of vibration. Here, the vibration may be replaced by a beep tone.

A dot basis feedback is described below. For example, the position of a filled dot may be fed back using voice. For another example, six vibration signals or beep tone signals for discriminating six dots are defined, and the position of a filled dot may be fed back as the vibration signal or the beep tone signal.

In addition, an embodiment of the present invention provides a delete function in preparation for erroneous inputting Braille. The deleting is performed on a character basis or a Braille basis. When a delete command occurs according to a predetermined method in a Braille input enable state, a recently input one character is deleted. For example, the delete command may be defined using a double tap, that is, two times of successive touch. For another example, the delete command may be defined by pressing a special key allocated for deleting a character.

Hereinafter, an operation and a construction of a device for providing a Braille input function are described with reference to the accompanying drawings.

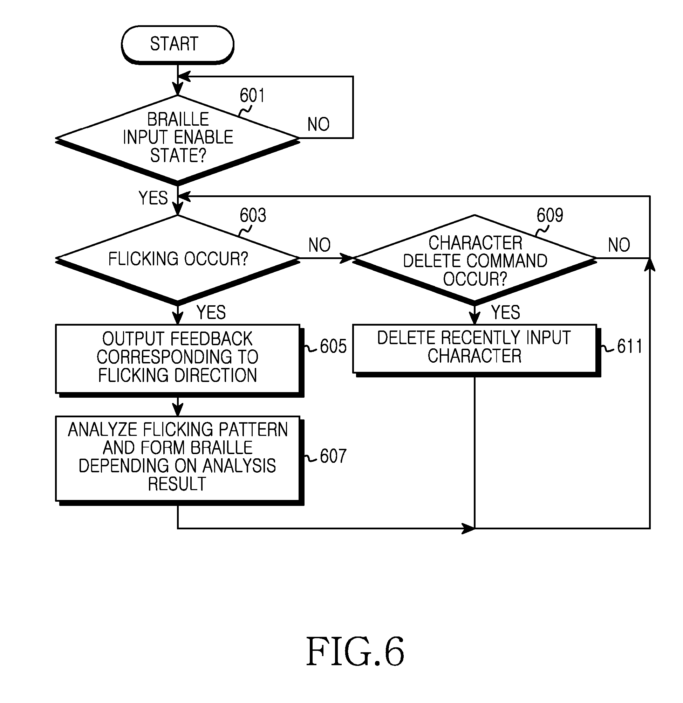

FIG. 6 is a flowchart illustrating a procedure for operating a device having a touch screen according to an embodiment of the present invention.

Referring to FIG. 6, the device determines whether Braille input is being entered in step 601. If the device is a Braille input device, when powerred on, Braille input may be received. However, if the device is a computing device such as a laptop computer, a smart phone, a tablet PC, or the like, Braille input is entered through an application for Braille input or if the device is operating in Braille input mode.

When Braille input is enabled, the device proceeds to step 603 to determine whether a flicking motion is occuring. The flicking motion consists of a tap-in, moving, and a tap-out on a touch screen.

When the flicking motion occurs, the device proceeds to step 605 to output a feedback corresponding to the flicking direction. That is, the device provides a feedback using vibration or sound corresponding to the direction of the flicking to inform whether the input is correct. When the flicking includes a plurality of change directions, a plurality of feedbacks may be output. Specifically, when using the vibration, feedback signals corresponding to different directions may be identified depending on the length of the vibration, the frequency of the vibration, and the like. When using the sound, the device may inform the direction of the flicking using voice. Alternatively, when using the sound, feedback signals corresponding to different directions may be identified depending on the length of a beep tone, a beep tone occurrence frequency, etc. According to an embodiment of the present invention, the device may provide feedback on a filled dot basis.

The device proceeds to step 607 to analyze the flicking pattern and configure Braille according to the analysis result. In other words, the device configures Braille by determining at least one flicking pattern defined in advance from the complete flicking motion, and filling a dot positioned corresponding to the determined flicking pattern. That is, the device stores a correspondence relation between a flicking pattern and a position of a dot inside Braille input. The flicking pattern defined in advance includes at least one of a pattern designating the position of a dot and a pattern designating a row or column change. For example, the flicking pattern defined in advance may be defined as in FIG. 2 or FIG. 4. The flicking pattern analysis and Braille configuring may be performed while the flicking is performed, or after the flicking is completed. Then, the device returns to step 603.

When the flicking does not occur in step 603, the device proceeds to step 609 to determine whether a character delete command occurs. The character delete command may be defined in various configurations. For example, the character delete command may be defined by a pressing of a special key allocated for deleting a character, or a touch input of a specific pattern. For example, the character delete command may be defined as a double tap.

When the character delete command occurs, the device proceeds to step 611 to delete one recently input character. That is, the device performs a backspace function. After that, the device returns to step 603.

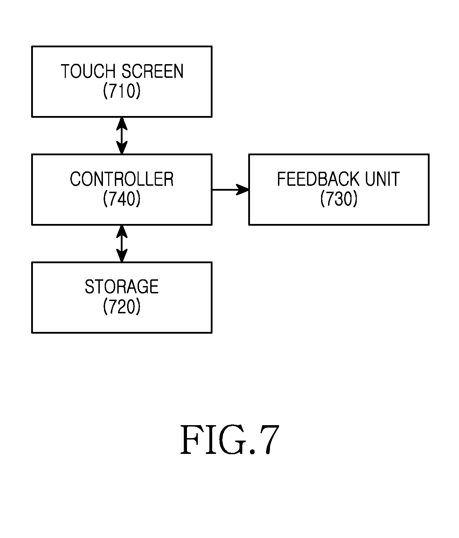

FIG. 7 is a block diagram illustrating a device having a touch screen according to an embodiment of the present invention.

As illustrated in FIG. 7, the device includes a touch screen 710, a storage 720, a feedback unit 730, and a controller 740.

The touch screen 710 performs a display function for displaying visual information and an input function for detecting a touch input by physical contact. That is, the touch screen 710 displays a state of the device, numbers, characters, images, pictures, etc. in a visual configure that can be viewed by a user under control of the controller 740. In addition, the touch screen 710 provides information such as tap-in, tap-out, change, etc. by the user's touch input to the controller 740. For example, for the display function, the touch screen 710 may include one of a Cathode Ray Tube (CRT), a Liquid Crystal Display (LCD), and an Organic Light-Emitting Diode (OLED). In addition, for the input function, the touch screen 710 may include a touch panel.

The storage 720 stores data such as a basic program for an operation of the device, setting information, etc. For example, the storage 720 stores a Braille table. More particularly, the storage 720 stores a correspondence relation between a flicking pattern defined in advance and a position of a dot inside Braille. The flicking pattern defined in advance includes at least one of a pattern designating the position of a dot and a pattern designating a row or column change. As a specific example, the flicking pattern defined in advance may be defined as in FIG. 2 or FIG. 4.

The feedback unit 730 provides a feedback for the user's Braille input under control of the controller 740. For example, the feedback unit 730 may include at least one of a speaker outputting sound, and a vibrator generating vibration. As a specific example, the feedback unit 730 may use a feedback signal defined using the length of the vibration and the frequency of the vibration as a factor. For another example, the feedback unit 730 may inform the direction of the flicking using voice. Alternatively, the feedback unit 730 may use a feedback signal defined using the length of a beep tone and the beep tone occurrence frequency as a factor.

The controller 740 controls an overall function of the device. For example, the controller 740 generates image data to provide the same to the touch screen 710, and performs a corresponding operation function using information regarding a touch input provided from the touch screen 710. More particularly, according to an embodiment of the present invention, the controller 740 analyzes the user's flicking pattern to configure Braille. A function for inputting the Braille is described below in more detail.

The controller 740 determines whether flicking occurs using information regarding a touch input provided from the touch screen 710 in a Braille input enable state. When the flicking occurs, the controller 740 determines a feedback signal corresponding to a flicking direction, and controls the feedback unit 730 to output vibration or sound depending on the determined feedback signal. Subsequently, the controller 740 configures Braille by determining at least one flicking pattern defined in advance from entire flicking, and filling a dot of a position corresponding to the determined flicking pattern. In addition, when a character delete command occurs, the controller 740 deletes a recently input one character. For example, the character delete command may be defined by a pressing of a special key allocated for deleting a character, or a touch input of a specific pattern. For example, the character delete command may be defined as a double tap.

In a device having a touch screen, it is possible to input characters, numbers, and the like, without using the sense of sight by inputting Braille using flicking patterns on the touch screen. Furthermore, it is possible to input at least one character with only a single flicking motion including a plurality of direction changes by efficiently defining flicking patterns.

Although several embodiments of the present invention have been described, various changes and modifications may be made therein without departing from the spirit and scope of the invention, as defined by the appended claims.

## Claims

1. A method for inputting Braille in a device having a touch screen, the method comprising:
detecting a flicking motion that occurs on the touch screen;
determining at least one of predetermined flicking patterns based on the flicking motion; and
configuring Braille input by filling a dot of a position corresponding to at least one flicking pattern determined inside the Braille input.

2. The method of claim 1, further comprising:
outputting a feedback signal corresponding to a direction of occurring flicking motion among predetermined feedback signals.

3. The method of claim 1, further comprising:
when a character delete command occurs, deleting a recently input one character.

4. An apparatus having a touch screen that provides a Braille input function, the apparatus comprising:
the touch screen for detecting flicking motion that occurs on the touch screen; and
a controller for determining at least one of predetermined flicking patterns based on the flicking motion, and configuring Braille input by filling a dot of a position corresponding to at least one flicking pattern determined inside the Braille input.

5. The apparatus of claim 4, further comprising a feedback unit for outputting a feedback signal corresponding to a direction of occurring flicking motion among predetermined feedback signals.

6. The apparatus of claim 4, wherein when a character delete command occurs, the controller deletes a recently input one character.

7. The method of claim 1 or the apparatus of claim 4, wherein the predetermined flicking patterns comprise at least one of at least one pattern designating a position of a dot, and a pattern designating one of a row change and a column change.

8. The method of claim 1 or the apparatus of claim 4, wherein the predetermined flicking patterns comprise patterns designating positions of respective dots configuring one Braille input.

9. The method of claim 8 or the apparatus of claim 8, wherein the predetermined flicking patterns comprise:
a first pattern defined as flicking motion to the left and then to the top, and designating a dot positioned upper left,
a second pattern defined as flicking motion to the left, and designating a dot positioned middle left,
a third pattern defined as flicking motion to the bottom and then to the left, and designating a dot positioned lower left,
a fourth pattern defined as flicking motion to the right and then to the top, and designating a dot positioned upper right,
a fifth pattern defined as flicking motion to the right, and designating a dot positioned middle right, and
a sixth pattern defined as flicking motion to the bottom and then to the right, and designating a dot positioned lower right.

10. The method of claim 1 or the apparatus of claim 4, wherein the predetermined flicking patterns comprise patterns designating positions of respective dots included in one column among dots configuring one Braille input and a pattern designating a column change.

11. The method of claim 10 or the apparatus of claim 10, wherein the predetermined flicking patterns comprise:
a first pattern defined as flicking motion to the top, and designating a dot positioned at an upper end,
a second pattern defined as flicking motion to the left, and designating a dot positioned at a middle end,
a third pattern defined as flicking motion to the bottom, and designating a dot positioned at a lower end, and
a fourth pattern defined as flicking motion to the right, and designating a column change.

12. The method of claim 2 or the apparatus of claim 5, wherein the feedback signal comprises at least one of vibration and a sound.

13. The method of claim 12 or the apparatus of claim 12, wherein the predetermined feedback signals are identified depending on frequency of vibration or a beep tone, and a length of the vibration or the beep tone.
